Europäisches Patentamt

European Patent Office

Office européen des brevets

(19)

(11) Publication number: **0 004 934**
**B1**

# (12) EUROPEAN PATENT SPECIFICATION

(45) Date of publication of patent specification: **05.05.82**

(51) Int. Cl.³: **C 02 F 3/20**

(21) Application number: **79101103.4**

(22) Date of filing: **10.04.79**

(54) A plant for biological purification of waste water.

(30) Priority: **13.04.78 DK 1618/78**

(43) Date of publication of application:
**31.10.79 Bulletin 79/22**

(45) Publication of the grant of the patent:
**05.05.82 Bulletin 82/18**

(84) Designated Contracting States:
**BE CH DE FR GB IT LU NL SE**

(56) References cited:
**DE - B - 2 751 470**
**FR - A - 1 464 017**
**FR - A - 2 322 834**
**GB - A - 1 115 877**
**US - A - 3 507 393**
**US - A - 4 021 347**

(73) Proprietor: **A/S Hotaco**
**Fabriksparken 38**
**DK-2600 Glostrup (DK)**

(72) Inventor: **Jacobsen, Anker Jarl**
**Bjergbakkevej 45**
**DK-2600 Glostrup (DK)**

(74) Representative: **Kador, Ulrich, Dr. et al,**
**Corneliusstrasse 15**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

A plant for biological purification of waste water.

The invention relates to a plant for biological purification of waste water, said plant comprising an aeration chamber in which the waste water is mixed with active sludge and is aerated through immersed diffusors, and a sedimentation chamber in which the sludge is precipitated and from which the purified water flows away through an overflow, and which is defined by an upwardly open plate insert mounted in an aeration tank, said plate insert having side walls inclining downwardly towards a bottom opening.

A plant of this type is disclosed in French patent specification No. 2 322 834 which also shows an arrangement of baffle plates mounted adjacent to the bottom opening of the plate insert and serving to eliminate the transverse components of flow from the introduced waste water.

In operation of such a plant, the sludge precipitated in the sedimentation chamber slides down the inclined side walls of the plate insert, out through the bottom opening and back to the aeration chamber.

However, sludge may accumulate at the bottom of the sedimentation chamber, which more or less clogs the bottom opening and impedes the operation of the plant.

This drawback is overcome by the plant of the invention where a central channel is defined in the plate insert between two substantially vertical, parallel plates extending between opposed side walls of the insert and substantially from their upper edges to a level spaced from but proximate to the bottom opening, said central channel being connected to the aeration chamber through a plurality of tubes.

This construction causes auxiliary currents to be generated in the portion of the plate insert which is located below said tubes, said auxiliary current contributing towards making the sludge present on the lower portions of the inclined walls of the insert slide down these walls without accumulating over the bottom opening and clogging fully or partially said opening. Each of the auxiliary currents form an essentially closed path extending upwardly from the bottom opening of the insert through the space between one of the inclined walls of the insert and the tank wall, in through the tubes and down through the central channel and the lower portion of the insert to its bottom opening.

The plant of the invention is further characterized by the provision of an outlet chamber which is defined at one end of the central channel by means of transverse walls and a bottom wall, said outlet chamber being connected to an outlet channel and receiving purified water which overflows from the sedimentation chamber formed by the plate insert, and having mounted therein a diffusor for oxidizing the water.

This construction has the advantage that the purified water is oxidized so effectively before it leaves the plant that it is not required to provide a separate, subsequent oxidizing plant.

The invention will be explained more fully below with reference to the drawing, in which

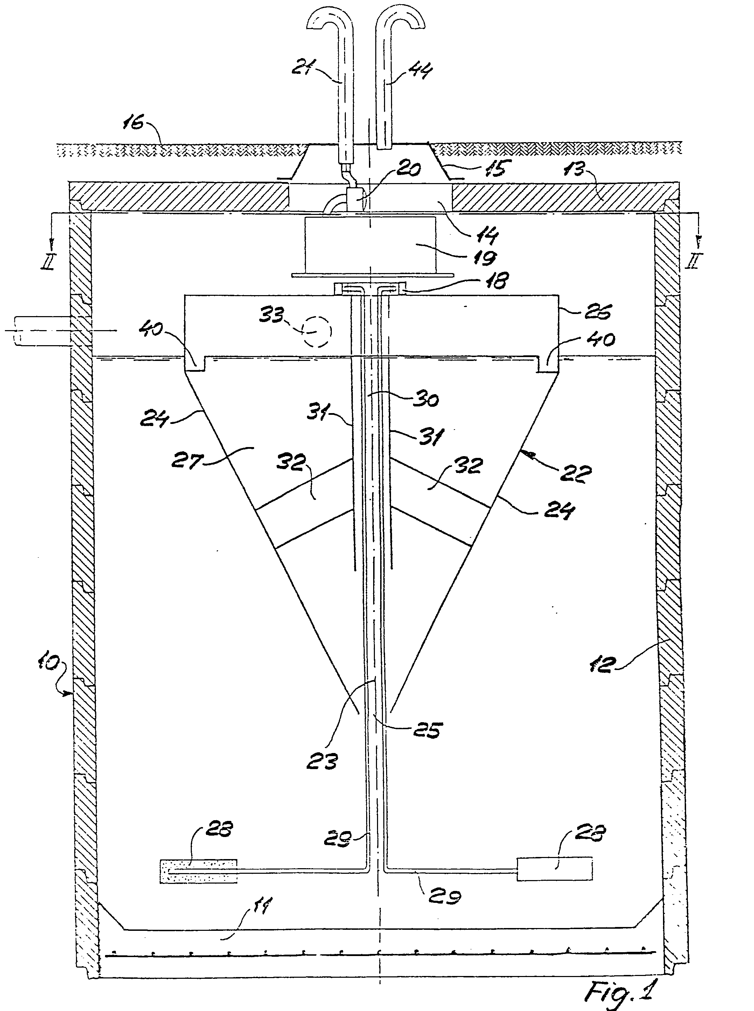

Fig. 1 shows a vertical section of an embodiment of the plant according to the invention,

Fig. 2 shows a horizontal section taken along the lines II—II in fig. 1, and

Fig. 3 is a perspective view of a detail of the plant.

In the drawing 10 is a cylindrical tank, which is dug into the ground and consists of a bottom 11 of reinforced concrete, a plurality of concrete rings forming the cylindrical wall 12, and a concrete cover 13 with an oblong, rectangular central opening 14 covered by a plate cover 15. The surface of the ground is designated 16. A substantially rectangular frame 18 is mounted in the upper portion of the tank by means of three brackets 17 secured to the tank wall. The frame 18 is composed of square pipes and extends across the interior of the tank, symmetrically with respect to a diametral plane 23. At one end the frame 18 carries a rotary blower 19 whose suction side is connected to an inlet pipe 21 through an air filter 20, and whose delivery side is connected to the frame pipes in a manner not shown in detail.

The frame 18 carries an essentially wedge-shaped plate insert generally designated 22. The insert has two inclined side walls 24 located symmetrically about the diametral plane 23 and whose lower edges are so spaced from each other that they define a comparatively narrow bottom opening 25. At the top the inclined walls 24 merge into comparatively low, vertical wall portions 26, and together with these and two further opposed side walls or gable walls 27 they define an upwardly open secondary sedimentation chamber within the aeration chamber formed by the rest of the tank space. The aeration chamber is aerated by a plurality of diffusors 28, six in the embodiment shown which are located near the bottom of the tank on both sides of the diametral plane 23, and which are connected to the pipe frame 18 through angularly bent carrier and air supply pipes 29 extending upwardly through the insert 22. Each diffusor 28 is formed of a cylindrical body of foam plastic having open pores and a central channel terminating in one end face, the end of the air supply pipe being inserted into said central channel.

In the plate insert 22 a longitudinal central channel 30 is defined by means of two parallel plates 31 extending between the gable walls 27 on their respective sides of and in parallel with the diametral plane 23. The upper edge of the plates 31 is flush with the upper edge of the vertical side walls 26 and the gable walls, and the lower edge of the plates 31 is located above but proximate to the bottom opening 25 of the insert. The central channel 30 communicates with the aeration chamber by means of said bottom opening and also through a plurality of tubes 32 which extend upwardly towards the plates 31 from the inclined walls 24, and whose ends are passed through holes in these walls and plates. In the embodiment shown six tubes 32 are provided substantially above their respective diffusors 28.

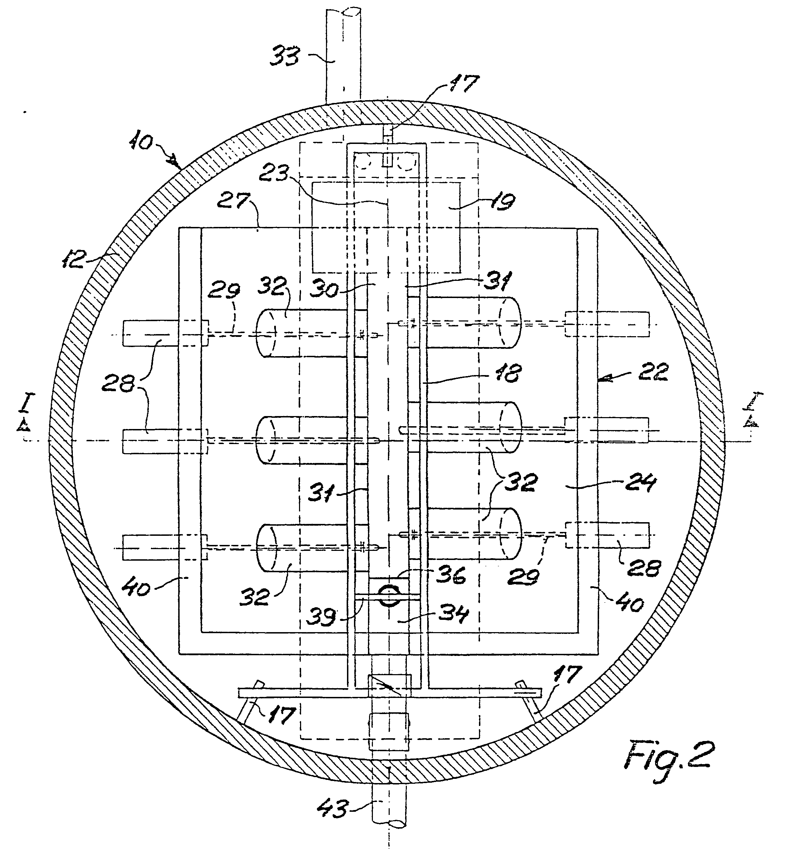

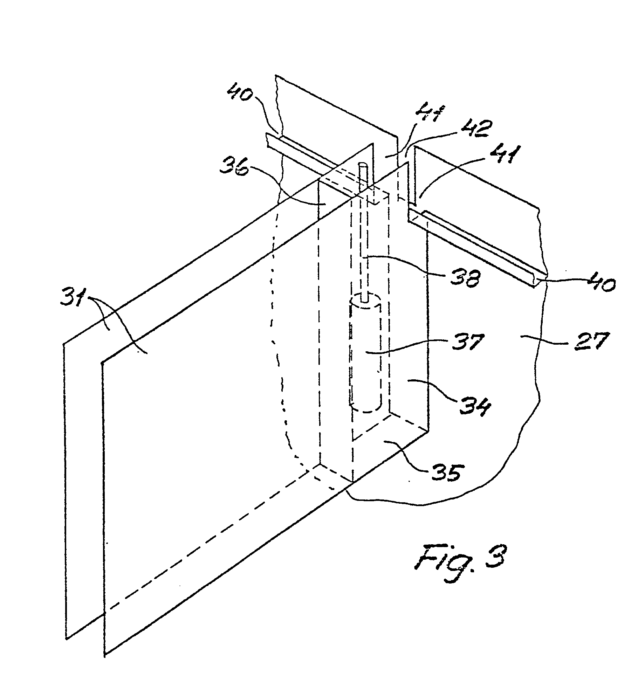

As shown more clearly in fig. 3, an outlet chamber 34 is defined at the end of the central channel 30 which is located substantially diametrically opposite the waste water inlet pipe 33. The outlet chamber is defined partly by the plates 31 and one gable wall 27, partly by a transverse wall 36 and a bottom 35. In the outlet chamber a diffusor 37 is mounted on an air supply pipe 38 in communication with the pipe frame 18 through a transverse pipe 39, fig. 2. The outlet chamber 34 receives purified water from overflow channels 40 extending along the inner side and the lower edge of the vertical side wall portions 26 as well as along the inner side of the gable wall 27 at the outlet chamber and terminating in the bottom of a cut-out 41 in the upper corner of each plate 31. The oxidized water leaves the outlet chamber via an overflow edge formed by the bottom of a rectangular cut-out 42 in the gable wall 27. An outlet channel 43, fig. 2, for the purified and oxidized water extends from said cut-out.

A vent pipe 44 is mounted in the cover 15.

The level of liquid in the tank 10 is determined by the location of the upper edge of the overflow channels 40. In operation of the plant, air bubbles from the diffusors 28 will generate currents in the waste water which is thus mixed intimately with the active sludge in the tank, and will also increase the reaction rate of the breaking-down processes with which the active sludge attacks impurities in the water.

Part of the mixture of water and sludge moves upwardly through the bottom opening 25 and into the sedimentation chamber, which is formed by the plate insert 22 and in which the sludge settles on and slides down the inclined walls 24. The pure surface water overflows the edge of the overflow channels 41 and from there out into the outlet chamber 34.

Some of the liquid currents generated in the aeration chamber flow through the tubes 32 into the central channel 30 and from there downwardly towards the bottom opening 25 where they contribute towards removing any accumulations of sludge.

The diffusor 37 in the outlet chamber 34 effectively oxidizes the purified water before it leaves the plant through the outlet channel 43.

The embodiment shown and described above may be modified in many respects within the scope of the invention. For example, the central channel 30 may also be connected to the aeration chamber through tubes terminating in the gable walls 27, and the plate insert may be a substantially truncated cone or pyramid instead of being wedge-shaped as shown.

## Claims

1. A plant for biological purification of waste water, comprising an aeration chamber in which the waste water is mixed with active sludge and is aerated through immersed diffusors, and a sedimentation chamber in which the sludge is precipitated and from which the purified water flows away through an overflow (40), and which is defined by an upwardly open plate insert (22) mounted in an aeration tank (10), said plate insert having side walls (24) inclining downwardly towards to a bottom opening (25), characterized in that a central channel (30) is defined in the plate insert (22) between two substantially vertical, parallel plates (31) extending between opposed side walls (27) of the insert and substantially from their upper edges to a level spaced from but proximate to the bottom opening (25), and that the central channel is connected to the aeration chamber through a plurality of tubes (32).

2. A plant according to claim 1, characterized by the provision of an outlet chamber (34) which is defined at one end of the central channel (30) by means of transverse walls (27 and 36) and a bottom wall (35), said outlet chamber being connected to an outlet channel (43) and receiving purified water which overflows from the sedimentation chamber formed by the plate insert (22) and having mounted therein a diffusor (37) for oxidizing the water.

## Revendications

1. Installation pour l'épuration biologique des eaux usées, avec une chambre d'aération, dans laquelle les eaux usées sont mélangées avec de boue activée et sont aérées par des diffuseurs immergés, avec une chambre à sédimentation, dans laquelle la boue est précipitée et de laquelle les eaux épurées s'écoulent par un déversoir (40), et laquelle est définie par un insert (22) en tôle, ouvert vers le haut, monté dans un bassin d'aération (10), l'insert en tôle ayant des parois latérales (24) inclinées vers le bas et vers une ouverture basse (25), caractérisée en ce qu'un canal central (30) est défini dans l'insert en tôle entre deux plaques (31) substantiellement verticales et parallèles qui s'étendent entre des parois latérales (27) opposés de l'insert et substantiellement des bords supérieurs de lesquels à un niveau qui a une distance mais la plus proche de l'ouverture basse (25), et que le canal central est relié avec la chambre d'aération par plusieurs tubes (32).

2. Installation conforme à revendication 1, caractérisée par la disposition d'une chambre de sortie (34) qui est définie à l'un bout du canal central (30) au moyen des parois transversales (27 et 36) et d'un parois bas (35), la chambre de sortie susnommée ayant reliée à un canal de sortie (43) et recevant des eaux purifiées se déversantes de la chambre de sédimentation formée par l'insert (22) en tôle, un diffuseur (37) étant monté à l'intérieur pour l'oxidation des eaux.

## Patentansprüche

1. Vorrichtung zur biologischen Reinigung von Abwasser mit einer Belüftungskammer, in der das Abwasser mit aktivem Schlamm vermischt und über eingetauchte Diffusoren belüftet wird, mit einer Sedimentationskammer, in der der Schlamm gefällt wird und von der das gereinigte Wasser über einen Überlauf (40) abfließt, und die durch einen oben offenen plattenförmigen Einsatz (22) bestimmt wird, der in einem Belüftungstank (10) montiert ist, wobei der plattenförmige Einsatz nach unten gegen eine Bodenöffnung (25) gerichtete Seitenwände (24) hat, dadurch gekennzeichnet, daß ein zentraler Kanal (30) in dem plattenförmigen Einsatz (22) zwischen zwei im wesentlichen vertikalen, parallelen Platten (31) begrenzt wird, die zwischen zwei entgegengesetzt angeordneten Seitenwänden (27) des Einsatzes und im wesentlichen von ihren oberen Kanten zu einer Ebene verlaufen, die im Abstant von, jedoch in der Nähe der Bodenöffnung (25) angeordnet ist, und daß der zentrale Kanal mit der Belüftungskammer über eine Vielzahl von Röhren (32) in Verbindung steht.

2. Vorrichtung nach Anspruch 1, gekennzeichnet durch die Anordnung einer Auslaßkammer (32), die an einem Ende des zentralen Kanals (30) mittels quer verlaufender Wände (27, 36) und einer Bodenwand (35) begrenzt wird, wobei die Auslaßkammer mit einem Auslaßkanal (43) in Verbindung steht und das gereinigte Wasser aufnimmt, das aus der Sedimentationskammer überläuft, die durch den plattenförmigen Einsatz (22) gebildet wird und einen Diffusor (37) zum Oxidieren des Wassers aufweist, der darin montiert ist.

**0 004 934**

Fig. 1

Fig.2

Fig. 3